# NOUVEAU FASCICULE DE BREVET EUROPEEN

(11) **EP 0 181 264 B2**
(45) Date de publication et mention de la décision concernant l'opposition: **03.05.1995**
(45) Mention de la délivrance du brevet: 12.07.1989
(21) Numéro de dépôt: 85402126.8
(22) Date de dépôt: 05.11.1985
(51) Int. Cl.: G21C 3/34

(54) **Grille à ailettes mélangeuses pour assemblage de combustible nucléaire**
Abstandshalter mit Mischfahnen für ein Kernbrennstoffbündel
Spacer grid with mixing vanes for a nuclear fuel assembly

(30) Priorité: 05.11.1984 FR 8416803
(43) Date de publication de la demande: 14.05.1986
(73) Titulaire: FRAMATOME, 92400 Courbevoie (FR)
(72) Inventeur: Noailly, Jean, F-69005 Lyon (FR)
(74) Mandataire: Fort, Jacques

(56) Documents cités:
- DE-A- 1 439 362
- DE-A- 1 564 697
- DE-A- 2 157 742
- DE-A- 2 326 151
- DE-U- 6 605 693
- FR-A- 1 536 258
- US-A- 4 224 107
- Thése présentée à la Technische Hochschule de Graz (AU) par P. Kafka "Bestimmung der Kühlmitteldurchmischung im Brennelement eines Druckwasserreaktors aufgrund von Modellversuchen"

## Description

La présente invention concerne les assemblages de combustible pour réacteurs nucléaires, et notamment pour les réacteurs nucléaires refroidis par circulation d'eau sous pression, du type comportant des crayons de combustible maintenus aux noeuds d'un réseau régulier par des grilles réparties le long au faisceau et comportant deux jeux de plaquettes métalliques entrecroisées munies d'ailettes mélangeuses destinées à dévier l'écoulement de réfrigérant dans l'assemblage.

Les assemblages de combustible nucléaire destinés aux réacteurs de puissance sont conçus et construits pour tenter de réaliser le meilleur compromis possible entre des exigences dans une large mesure contradictoire. Il faut que l'absorption neutronique des matériaux de structure et de guidage de l'écoulement soit aussi faible que possible. Cela conduit à constituer la gaine des crayons en matériau à faible section de capture et à réduire le plus possible l'importance du squelette de solidarisation des éléments constitutifs de l'assemblage. On a en particulier réussi à éviter l'emploi d'une enveloppe périphérique pleine autour du faisceau et à réduire pratiquement le squelette à deux embouts reliés par des éléments allongés et à des grilles réparties le long du faisceau et délimitant des alvéoles individuels pour les crayons.

Un autre résultat recherché lors de la conception des assemblages est de rendre la température des gaines aussi homogène que possible, c'est-à-dire de réduire les points chauds, ce qui implique que l'écoulement de réfrigérant soit homogène dans l'ensemble de l'assemblage. Les ailettes mélangeuses ont notamment pour but d'homogénéiser l'écoulement et de réduire les écarts de température en provoquant une redistribution transverse des filets de réfrigérant. Mais il faut également éviter que la présence des ailettes ne provoque un accroissement de perte de charge telle qu'il y ait réduction inacceptable du débit. On connait déjà de nombreux modèles de grilles munies d'ailettes mélangeuses. Le document FR-A-2 198 221 décrit par exemple une grille comportant des ailettes qui provoquent la formation d'un vortex de grand diamètre par rapport aux espaces entre crayons. Le document FR-A-2 093 981 décrit une grille dont les ailettes sont placées de façon à induire un écoulement sous forme de courants concentriques, de sens alternés dans l'assemblage.

Pour faciliter l'exposition de l'invention et éviter toute ambiguité. on adoptera par la suite la terminologie suivante.

Le terme "étranglement" désignera l'endroit où deux crayons adjacents sont séparés par la plus courte distance. On appellera "cellule hydraulique" l'espace compris entre quatre étranglements délimités par quatre crayons adjacents, dont les axes occupent les noeuds d'une maille carrée. Et on appellera "bilan hydraulique radial" la somme arithmétique des débits qui entrent dans une cellule hydraulique et en sortent en direction radiale. Un bilan équilibré correspond à une somme nulle des débits entrant et sortant perpendiculairement à la direction générale de l'écoulement dans l'assemblage.

Les grilles décrites dans les documents FR-2 198 221 et 2 093 981 ne sont pas satisfaisantes car elles ne permettent pas de donner au bilan hydraulique une valeur nulle dans chaque cellule. Au surplus, la quantité de matière représentée par les ailettes, change d'une cellule hydraulique à l'autre dans la grille décrite dans le document FR-A-2 198 221.

Le document FR-A-1 536 258 décrit de son côté une grille comportant des ailettes placées dans les étranglements. Du point de vue hydraulique, ce choix est très défavorable car il réduit encore la section de passage offerte au réfrigérant à l'emplacement où cette section est déjà minimale.

On connaît déjà (DE-A-1 564 697) une grille d'espacement suivant le préambule de la revendication 1. Les demi-ailettes sont disposées par couples sur chaque plaquette, et les deux demi-ailettes symétriques par rapport à une intersection avec une plaquette perpendiculaire sont inclinées en sens inverse. Cette disposition peut gêner l'emboîtement mutuel des plaquettes pour constituer les grilles.

On connait également (DE-A-2 326 151) une grille comportant, à chaque angle d'alvéole, deux ailettes complètes dont chacune s'étend au dessus de deux alvéoles voisins.

L'invention vise à fournir une grille d'espacement à ailettes mélangeuses pour assemblage de combustible répondant mieux que celles antérieurement connues aux exigences de la pratique, notamment par une présence d'ailettes d'un seul côté de la grille, une bonne homogénéité du point de vue hydraulique, et une répartition homogène des ailettes dans la grille (donc une présence de matériau absorbant sensiblement égale pour toutes les cellules hydrauliques).

Pour arriver à ce résultat, l'invention part de l'hypothèse qu'il convient de rendre chaque cellule hydraulique symétrique par rapport à son axe et d'éviter en même temps la présence d'ailettes dans les étranglements.

L'invention propose en conséquence une grille conforme à la partie caractérisante de la revendication 1.

La disposition suivant l'invention permet d'obtenir dans chaque cellule hydraulique, un bilan hydraulique radial équilibré à deux flux entrants et deux flux sortants. La quantité de matière représentée par les demi-ailettes est la même pour toute les cellules hydrauliques. Il y a circulation directe dans les étranglements suivant les deux directions permettant ainsi de balayer les zones où le taux de vide est élevé en cas d'ébullition. Du fait de cette circulation avec des courants à direction perpendiculaire, les intersections de courant sont reportées vers les intersections des plaquettes, c'est-à-dire là où la veine fluide est la plus large.

L'invention sera mieux comprise à la lecture de la description qui suit d'un mode particulier d'exécution, donné à titre d'exemple. La description se réfère aux dessins qui l'accompagnent, dans lesquels:
- la figure 1 est un schéma de principe, en vue de dessus, montrant la répartition des demi-ailettes dans un groupe de neuf alvéoles,
- la figure 2 est un schéma montrant la répartition du flux hydraulique dans le groupe d'alvéoles de la figure 1,
- la figure 3, similaire à la figure 1 montre une réalisation,
- la figure 4 est une vue de dessus d'une fraction de grille mettant en oeuvre l'invention dans le mode de réalisation de la figure 3,
- la figure 5 est une vue en couple suivant la ligne V - V de la figure 4.

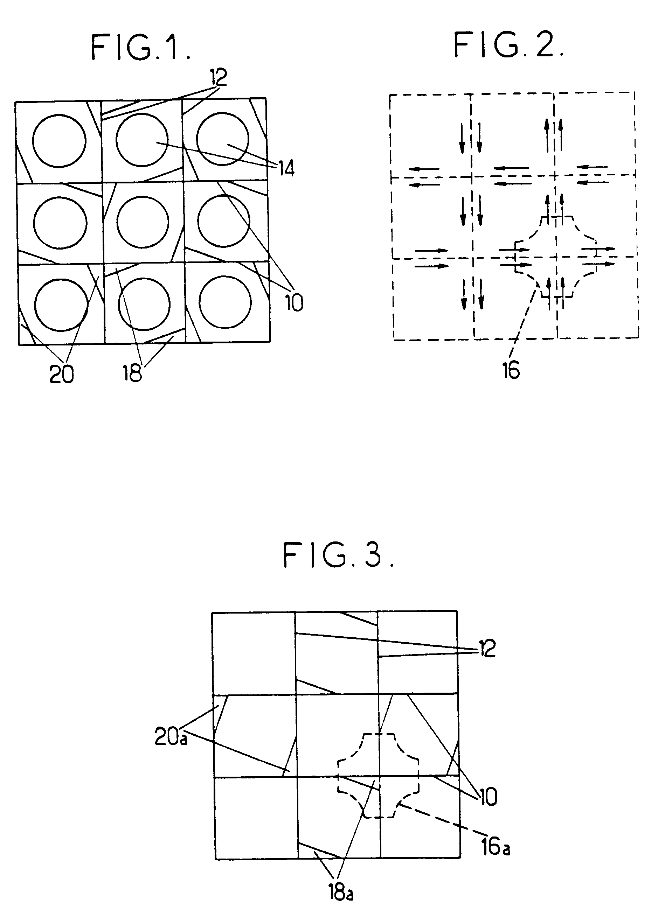

La grille dont un fragment est schématisé en figures 1 et 2 comporte, de façon classique, deux jeux entrecroisés de plaquettes 10 et 12 délimitant des alvéoles de réception d'éléments allongés 14. La majeure partie au moins de ces éléments sont des crayons de combustible. D'autres peuvent être des tubes guides dans lesquels coulissent des crayons de réglage de réactivité et/ou du taux de modération.

Chaque alvéole comporte deux demi-ailettes placées du même côté de la grille. Du fait que chacune de ces demi-ailettes n'intéresse qu'un seul alvéole, il est possible de placer toutes les demi-ailettes du même côté de la grille puisqu'elles ne gênent pas l'assemblage des plaquettes par entrecroisement à mi-fer. Les demi-ailettes 18 orientées suivant une direction peuvent être portées par les plaquettes 12, celles 20 orientées dans la direction perpendiculaire étant portées par les plaquettes 10. Ainsi chaque alvéole comporte deux demi-ailettes opposées selon l'une de ses diagonales et à chaque croisement de deux plaquettes orthogonales se trouvent deux demi-ailettes perpendiculaires l'une à l'autre.

On constate sur la figure 1 que la quantité de matière représentée par les demi-ailettes est la même pour tous les alvéoles. Cette quantité de matière est également la même pour toutes les cellules hydrauliques, telles que la cellule 16 délimitée par des tirets sur la figure 2. Le bilan hydraulique est équilibré dans toutes les cellules, exception faite éventuellement des cellules de bord, et comporte deux flux entrants et deux flux sortants comme cela apparaît sur la figure 2. Enfin, il y a circulation directe dans les étranglements suivant deux directions.

Les demi-ailettes peuvent être constituées par simple pliage de pattes découpées, solidaires des plaquettes, avant assemblage de ces dernières.

Dans la réalisation montrée en figure 3, chaque cellule telle que 16a ne comporte qu'une seule demi-ailette 18a ou 20a. Les ailettes de deux cellules adjacentes sont orthogonales et la symétrie diagonale des débits hydrauliques est conservée. Le bilan hydraulique reste équilibré, à un flux entrant et un flux sortant. Et la quantité de matière représentée par les ailettes reste la même pour toutes les cellules hydrauliques.

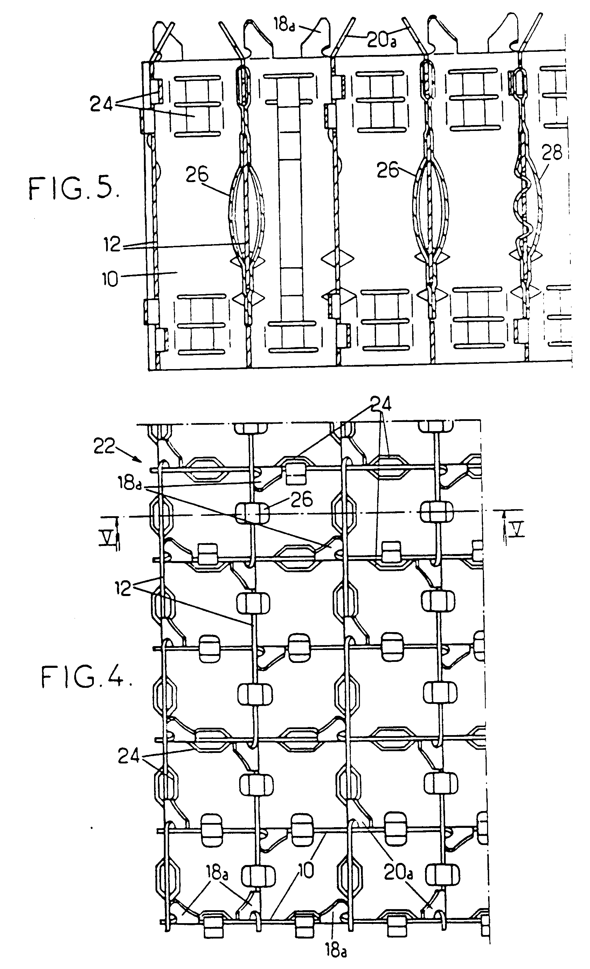

Les figures 4 et 5 montrent une constitution possible de grille répondant au schéma de la figure 3. La grille 22 montree sur ces figures a une constitution générale classique. Elle comporte des plaquettes 10 et 12, généralement en alliage à base de zirconium, assemblées à mi-fer et soudées en leurs points de croisement. Chaque plaquette comporte des bossages 24 d'appui de crayons de combustible et diverses ouvertures coopérant avec des ressorts destinés à appliquer les crayons sur les bossages. Dans le cas illustré, ces ressorts sont rapportés. Certains des ressorts, par exemple le ressort 26, sont doubles et insérés à cheval dans des échancrures des plaquettes débouchant sur une des tranches. D'autres ressorts, tels que le ressort 28, sont simples et donc de constitution disymétrique.

Des grilles de ce genre sont décrites dans des documents antérieurs, notamment la demande de brevet FR-8 217 717.

La grille des figures 4 et 5 comporte une demi-ailette par cellule hydraulique. Chaque plaquette 10 porte des ailettes 18a avec un pas double de celui des alvéoles. Toutes les ailettes d'une même plaquette 10 sont inclinées dans le même sens, opposé à celui des ailettes des deux plaquettes 10 adjacentes. Les demi-ailettes 18a sont ainsi disposées en quinconce. Un alvéole sur deux est ainsi muni de deux demi-ailettes 18a placées aux extrémités de sa diagonale, du moins la partie courante de la grille. Cette disposition doit être parfois modifiée au bord des grilles où certaines ailettes 18a peuvent présenter une disposition inversée, symétrique par rapport à la plaquette externe.

On retrouve la même disposition pour les ailettes 20a portées par les plaquettes 12.

Le choix entre la disposition montrée en figure 1 et celle des figures 3 à 5 sera fait en fonction de l'importance relative qu'on attache à une homogénéisation du mélange et à la réduction des pertes de charge. Dans le cas d'une seule ailette par cellule hydraulique, le mélange par déflexion des filets fluides est moins complet, mais en contrepartie la perte de charge est notablement diminuée puisque le nombre d'ailettes devient presque inférieur de moitié.

L'invention est susceptible de nombreuses variantes et elle s'applique à des grilles de constitution très variée. En particulier, l'invention peut être mise en oeuvre lorsque les ressorts de maintien des crayons de combustible dans les grilles sont constitués par des parties découpées des plaquettes, comme cela est décrit par exemple dans le document FR-A-1 536 258.

Il doit être entendu que de telles variantes, ainsi plus généralement que toutes autres restant dans le cadre des équivalences, sont couvertes par le présent brevet.

## Revendications

1. Grille d'espacement à ailettes mélangeuses d'assemblage de combustible nucléaire, grille comportant deux jeux de plaquettes (10, 12) métalliques entrecroisées pour délimiter des alvéoles de réception de crayons de combustible, ayant chacune des doigts en saillie pliés pour constituer uniquement des demi-ailettes (18, 20; 18a, 20a) s'étendant chacune d'un seul côté d'une plaquette d'un jeu à l'intersection avec une plaquette de l'autre jeu et intéressant chacune un seul alvéole de la grille, les demi-ailettes étant disposées par couples opposés aux angles des alvéoles et les demi-ailettes d'un alvéole étant placées à 90° des demi-ailettes des alvéoles les plus proches munis de demi-ailettes (18, 20; 18a, 20a), caractérisée en ce que chaque plaquette (10, 12) comporte au plus une demi-ailette (18, 18a, 20, 20a) à chaque angle d'alvéole, et
en ce que chaque cellule hydraulique délimitée par quatre crayons placés dans quatre alvéoles directement adjacents contient une seule demi-ailette qui est orthogonale aux demi-ailettes placées dans les cellules hydrauliques les plus proches.

2. Grille selon l'une quelconque des revendications précédentes, caractérisée en ce que les demi-ailettes sont disposées d'un seul côté de la grille.

3. Grille selon l'une quelconque des revendications précédentes, caractérisée en ce que certaines des demi-ailettes, placées au bord de la grille, ont une disposition inversée par rapport à celle des autres demi-ailettes.

4. Assemblage de combustible nucléaire comprenant un faisceau de crayons de combustible maintenu aux noeuds d'un réseau régulier par des grilles réparties le long du faisceau et par des embouts reliés par des éléments allongés, caractérisé en ce les grilles sont telles que définies par l'une quelconque des revendications précédentes.

## Patentansprüche

1. Abstandsgitter mit Mischrippen für ein Kernbrennstoffbündel, Gitter, welches zwei sich kreuzende Sätze von metallischen Platten (10, 12) aufweist, um Aufnahmezellen von Brennstäben zu begrenzen, wobei jede Vorsprungfinger aufweist, die umgeschlagen sind, um nur Halbrippen (18, 20; 18a, 20a) zu bilden, von denen sich jede auf einer einzigen Seite einer Platte eines Satzes an der Kreuzungsstelle mit einer Platte des anderen Satzes erstreckt und jede einer einzigen Zelle des Gitters zuordnet, wobei die Halbrippen paarweise den Zellenecken gegenüberliegend angeordnet sind und die Halbrippen einer Zelle bezüglich den Halbrippen der nächstliegenden Zellen, die mit den Halbrippen (18, 20; 18a, 20a) versehen sind, um 90° versetzt angeordnet sind, dadurch gekennzeichnet, daß jede Platte (10; 20) höchstens eine Halbrippe (18, 18a, 20a) an jeder Zellenecke aufweist,
und daß jede Hydraulikzelle die durch vier Stäbe begrenzt ist, die in vier direkt aneinanderliegenden Zellen angeordnet sind, eine einzige Halbrippe aufweist, die senkrecht zu Halbrippen verläuft, die in den nächstliegenden hydraulischen Zellen angeordnet sind.

2. Gitter nach einem der vorhergehenden Ansprüche, dadurch gekennzeichnet, daß die Halbrippen nur auf eine Seite des Gitters angeordnet sind.

3. Gitter nach einem der vorhergehenden Ansprüche, dadurch gekennzeichnet, daß bestimmte der Halbrippen, die am Rand des Gitters angeordnet sind, eine umgekehrte Anordnung bezüglich jener der anderen Halbrippen aufweisen.

4. Kernbrennstoffbündel mit einem Bündel von Kernbrennstäben, die an Knotenpunkten eines regelmäßigen Netzes durch Gitter gehalten werden, die entlang des Bündels verteilt angeordnet sind und durch Endstücke, die durch Längselemente verbunden sind, dadurch gekennzeichnet, daß die Gitter solche sind, wie sie durch einen der vorhergehenden Ansprüche definiert sind.

## Claims

1. Spacing grid with mixing fins for a nuclear fuel assembly, comprising two intersecting sets of metal plates (10, 12) for defining pockets receiving fuel elements, each having projecting fingers which are folded for only constituting half fins (18, 20; 18a, 20a) each extending on a single side of a plate of a set at the intersection with a plate of the other set and each concerning a single pocket of the grid, the half fins being disposed in opposed pairs at the angles of the pockets and the half fins of a pocket being located at 90° from the half fins of the closest pockets provided with half fins (18, 20; 18a, 20a),
characterized in that each plate (10, 12) has at most a half fin (18, 18a, 20, 20a) at each pocket angle, and
in that each hydraulic cell defined by four elements located in four pockets which are immediately adjacent contains a single half fin which is orthogonal to the half fins located in the closest hydraulic cells.

2. Grid according to any one of the preceding claims, characterized in that the half fins are located on a single side of the grid.

3. Grid according to any one of the preceding claims, characterized in that some of the halffins, located at the edge of the grid, have a reversed arrangement with respect to that of the other half fins.

4. Nuclear fuel assembly comprising a bundle of fuel elements held in position at the nodal points of a regular network by grids spaced along the bundle and by end nozzles mutually connected by elongated elements, characterized in that the grids are as defined in any one of the preceding claims.
